(19) Europäisches Patentamt
European Patent Office
Office européen des brevets

(11) **EP 3 150 987 A1**

(12) **EUROPEAN PATENT APPLICATION**

(43) Date of publication:
**05.04.2017 Bulletin 2017/14**

(51) Int Cl.:
***G01N 11/14*** *(2006.01)*

(21) Application number: **15187524.2**

(22) Date of filing: **30.09.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **University Of Oulu**
**90014 University of Oulu (FI)**

(72) Inventors:
- **Kinnunen, Päivö**
**90014 University of Oulu (FI)**

- **Czajkowski, Jakub**
**90014 University of Oulu (FI)**
- **Lahti, Anni**
**90014 University of Oulu (FI)**
- **Haapanen, Karoliina**
**90014 University of Oulu (FI)**
- **Fabritius, Tapio**
**90014 University of Oulu (FI)**

(74) Representative: **Berggren Oy, Helsinki & Oulu**
**Sepänkatu 20**
**90100 Oulu (FI)**

(54) **METHOD FOR MONITORING VISCOELASTIC PROPERTIES OF FLUIDS AND ITS USE IN MEASURING BIOFILMS**

(57)    Method, apparatus and computer program for sensing viscoelasticity within a fluid or gel-based material sample. External magnetic field is created around the material sample wells, and each well comprises a rod-shaped sensor submerged in the material. The magnetic driving force ends up rotating the sensor in an oscillating manner, and the sensor angle changes are observed using a magnetic field. Besides using the camera, the tracking may be done by simultaneous observation and actuation of the sensor using overlapping magnetic fields. The resulting sensor angle data can be analyzed in a PC, and the angular or slope data of the sensor reveals possible underdamped oscillations through non-continuous derivatives in the angle data. When underdamped oscillations are found, the fluidic material surrounding the sensors incorporates a viscoelastic property. Viscoelastic sensing is useful in e.g. biofilm monitoring for several medical applications, and in food and forest industries.

Figure 1

EP 3 150 987 A1

## Description

### Background of the invention

Viscoelasticity is a property of materials where the material comprises both viscous and elastic characteristics. Viscous kind of behavior for materials means that there is more internal resistance within the material when stress or an external force (such as gravity) affects the material. This can be seen when e.g. pouring honey and pouring water from a container, honey having clearly a greater stiffness and thus, also greater viscosity than water. Elasticity means the ability of the material to recover into the same shape after the material has been affected by a force and deformations have taken place as a response to this force. A good example of an elastic piece of material is a tennis ball. Viscoelastic material incorporates both these properties to at least some extent.

For many ordinary, and industrial and chemical substances, viscoelasticity is present to at least some extent, such as for paints, glues, many polymer melts or everyday grocery products such as ketchup or mayonnaise. Rheology is a science branch which studies deformations and flowing properties of different materials. For some applications, it is sufficient to have qualitative information as to whether the material is viscoelastic to some extent or not at all. For some other applications, a further detailed analysis resulting in viscoelastic parameter data needs to be achieved.

The first case above, i.e. the mere qualitative analysis, is relevant e.g. in online biofilm monitoring processes. In these processes there can often emerge a situation where inorganic material accumulation should be discerned from organic biofilm type of accumulation. Importantly, different biofilms behave like a viscoelastic material while inorganic material behaves in a Newtonian manner. Newtonian fluid means that shear strain rate and shear viscous stress are linearly proportional with each other.

In prior art, properties of fluids (such as hydrodynamic volume of a measuring bead) have been examined by e.g. using average rotation rate of magnetic beads flowing on a fluid sample which beads are affected by an external magnetic field. However, relevant properties regarding viscoelasticity, such as determining the storage modulus and the loss modulus parameters, are impossible to measure by measuring the average rotation rate.

Chevry, Sampathkumar, Cebers, Berret: "Magnetic wire-based sensors for the microrheology of complex fluids", Phys. Rev. E. 88 (2013) 062306, describes magnetic wire-based sensors in a complex fluid analysis. "Chevry" studies the low inertial behavior of a magnetic bar in a micro-scale viscoelastic medium and it found a possibility to derive the following viscoelastic parameters from the rotational response of the medium: the static viscosity of the fluid, $\eta_0$, elastic modulus, Go, and as their quotient, $\tau_R$, the relaxation time of the fluid.

So-called AMBR ("Asynchronous Magnetic Bead Rotation") sensors were discussed in patent application WO 2012/027747 (McNaughton, Kinnunen et al. / University of Michigan). The core matter of this publication is that bio-based cells can attach to magnetic particles, and these particles may form together a larger cluster. A rotating magnetic field is then set to affect this cluster. When the rotation speed alters, it is possible to indicate presence of an increased biomass (like bacteria) together with the magnetic particles.

US 2011/0036150 ("Sakai") discloses an apparatus and a method for measuring dynamical properties, such as viscosity and elasticity, of materials. As discussed in par. [0103], the measurement of elasticity is based on a static position of a rotor in the material, with a predetermined torque affecting the rotor and the elastic force restricting that force. Also, standard samples with known elasticity are used as a reference in determining the proportional coefficients of the unknown sample, and this coefficient is inversely proportional to the elastic modulus. Thus, Sakai shows a static measurement method for elasticity.

The problem in prior art solutions is that there has not been available a remotely operated disposable sensor for finding out viscoelastic properties in liquid or gel-based materials and solutions.

### Summary of the invention

The present invention introduces a method for determining a presence of viscoelasticity and also the viscoelastic parameters of liquid substances and solutions.

One appropriate application area for the invention is monitoring biofouling. In many places, industrial applications and crucial medical applications, bacteria may attach to wet surfaces and thus, create a slimy layer over time which can be called a biofilm. Biofilm is characteristically viscoelastic material, and the presented monitoring method is well applicable to detect different kinds of biofilms.

The present invention introduces a method for determining viscoelasticity within a material sample. The method is characterized in that it comprises the steps of:

- placing a sensor in a material sample;
- creating an oscillating magnetic field in the volume of the material sample, resulting in a magnetic force setting the sensor off to a rotating motion in the material sample;

- tracking a relative angle of the sensor as a function of time; and
- determining the material of the material sample as viscoelastic if underdamped oscillations are present in the relative angle values as a function of time.

In an embodiment of the method, the sensor is essentially rod-shaped or elongated, or the sensor is a disc-shaped plate, or the sensor is formed by at least two disc-shaped plates placed on top of one another.
In an embodiment of the method, the sensor comprising at least one disc-shaped plate further comprises a ring magnet attached to a bottom plate of the sensor.
In an embodiment of the method, the rod-shaped or elongated sensor is flattened in one direction in order to restrict its rotation around a single rotation axis.
In an embodiment of the method, the tracking step is performed visually by a camera locating on top of or below the material sample.
In an embodiment of the method, the material sample is provided in a transparent receptacle when the camera locates below the material sample.
In an embodiment of the method, the tracking step is performed by simultaneous observation and actuation of the sensor using overlapping magnetic fields.
In an embodiment of the method, the observation is performed by an Anisotropic Magneto-Resistive magnetic field sensor which sensor comprises two galvanic separated Wheatstone bridges orientated essentially at an angle of 45°.
In an embodiment of the method, the sensor and the material sample are placed in a sample well in proximity of the oscillating magnetic field creation means, and the sensor is prevented from touching the walls of the well.
In an embodiment of the method, the oscillating magnetic field creation means comprise four driving coils located symmetrically around the sample, in a square-formed arrangement.
In an embodiment of the method, underdamped oscillations appear especially in frequencies measured in the asynchronous area nearing the critical frequency.
In an embodiment of the method, the underdamped oscillations mean a noncontinuous derivative of the sensor angle value in periodical time instants.
In an embodiment of the method, the material to be measured is fluidic or gel-based material, or a mixture or solution comprising several materials, where the sensor is submergeable.
In an embodiment of the method, it further comprises the step of drawing a graph showing the sensor relative angle as a function of time or frames based on the tracking data.
The inventive idea also comprises an apparatus for determining viscoelasticity within a material sample. The apparatus is characterized by that it comprises:

- at least one well for a material sample;
- at least one sensor submerged in the material sample within each well;
- oscillating magnetic field creation means for creating an oscillating magnetic field in the volume of the wells, resulting in a rotating motion of the sensor in the material sample in the well;
- control means for controlling the oscillating magnetic field creation means;
- tracking means for tracking relative angles of the sensor as a function of time;
- analysis means for detecting underdamped oscillations in the tracked relative angles of the sensor, and if underdamped oscillations are present, the analysis means is further configured to determine the material of the material sample as viscoelastic; and
- outputting means configured to output the viscoelasticity of the material sample.

In an embodiment of the apparatus, the sensor is essentially rod-shaped or elongated, or the sensor is a disc-shaped plate, or the sensor is formed by at least two disc-shaped plates placed on top of one another.
In an embodiment of the apparatus, the sensor comprising at least one disc-shaped plate further comprises a ring magnet attached to a bottom plate of the sensor.
In an embodiment of the apparatus, the rod-shaped or elongated sensor is flattened in one direction in order to restrict its or their rotation around a single rotation axis.
In an embodiment of the apparatus, the oscillating magnetic field creation means comprise four driving coils located symmetrically around the at least one well, in a square-formed arrangement.
In an embodiment of the apparatus, the control means comprises a signal receiver and a current amplifier handling the current fed to the coils.
In an embodiment of the apparatus, the apparatus comprises attaching means for fixing a sensor to its respective well so that the movement of the sensor is restricted around a single rotation axis.
In an embodiment of the apparatus, the tracking means is a camera or other visual sensing means locating on top of or below the material sample.

In an embodiment of the apparatus, the well is a transparent receptacle when the camera locates below the material sample.

In an embodiment of the apparatus, the tracking means is configured to track the relative angles of the sensor by simultaneous observation and actuation of the sensor using overlapping magnetic fields.

In an embodiment of the apparatus, the observation is performed by an Anisotropic Magneto-Resistive magnetic field sensor which sensor comprises two galvanic separated Wheatstone bridges orientated essentially at an angle of 45°.

In an embodiment of the apparatus, the wells are placed in proximity of the oscillating magnetic field creation means, and the apparatus comprises means for preventing the sensor from touching the walls of the well.

In an embodiment of the apparatus, the material to be measured is fluidic or gel-based material, or a mixture or solution comprising several materials, where the sensor is submergeable.

In an embodiment of the apparatus, the analysis means is configured to draw a graph showing the sensor relative angle as a function of time or frames based on the tracking means data.

The inventive idea of the present invention also comprises a computer program for determining viscoelasticity within a material sample, wherein the computer program is implemented as computer program code, which can be executed by a processor. At first, a sensor is placed in a material sample. The computer program is then characterized by that it is configured to comprise the steps of:

- creating an oscillating magnetic field in the volume of the material sample, resulting in a magnetic force setting the sensor off to a rotating motion in the material sample;
- tracking a relative angle of the sensor as a function of time; and
- determining the material of the material sample as viscoelastic if underdamped oscillations are present in the relative angle values as a function of time.

**Brief description of the drawings**

Figure 1 illustrates the observation arrangement of the fluidic sample for determining possible viscoelasticity of the fluid,

Figure 2 illustrates the rod-shaped small sensor bead on top the fluid sample surface in a single well,

Figure 3 shows the presented viscoelasticity determining method as a flow chart,

Figures 4a-f illustrate measurement graphs of the angular behavior of the sensor submerged in Newtonian and viscoelastic fluidic materials, and

Figure 5 shows an embodiment where simultaneous actuation and observation of the sensor is performed through rotating magnetic field, without using a camera.

**Detailed description of the embodiments**

The present invention introduces a method and a device for easily determining the presence of viscoelasticity within an examined fluid sample.

The present invention applies a sensor which is a so-called massive sensor, meaning that its weight is not negligible, and the mass can be taken properly into account in analytical calculations. The basic form of the sensor is rod-shaped but this must be understood in a broad manner. The main feature within the sensor or the sensor bead is that its rotation is trackable from the vicinity of the sample, e.g. from above or below the measurement well. The sensor may be elongated to some extent. Furthermore, the sensor may be flattened in one side in order to restrict its motion around a single rotation axis.

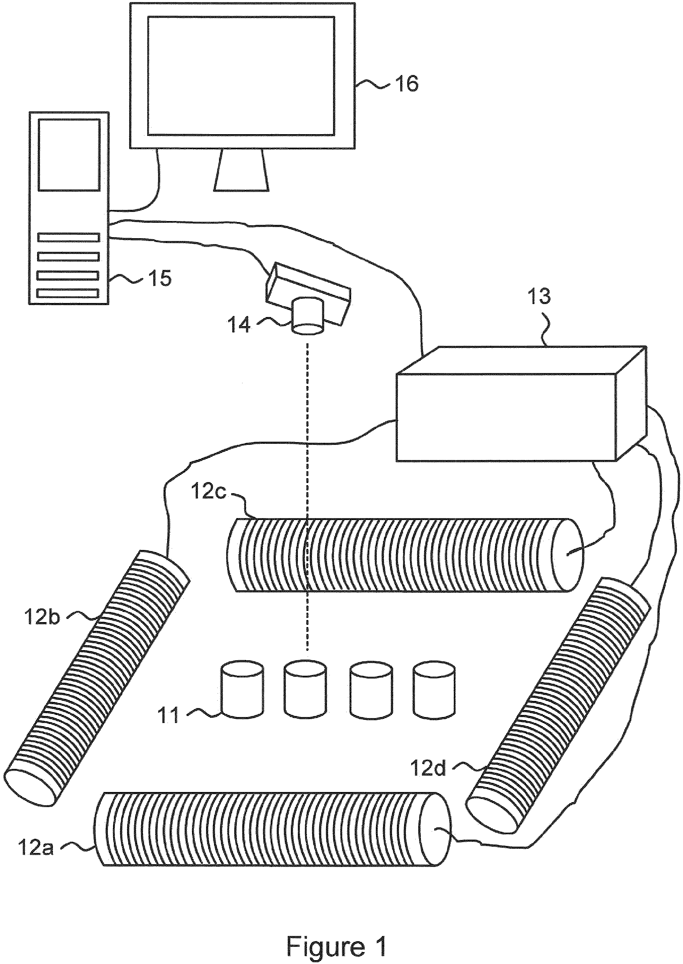

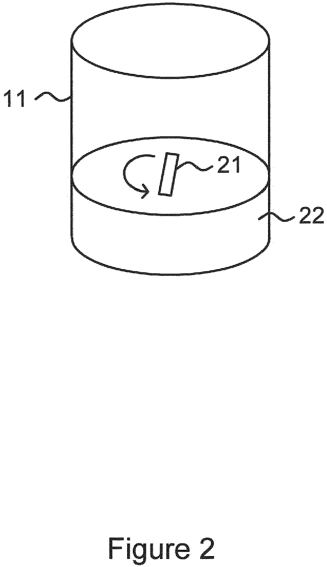

Figures 1 and 2 illustrate an apparatus which is an exemplary configuration for determining viscoelasticity for fluid-based materials, and a zoomed-in illustration of a single well with the examined material. The fluidic or gel-type material 22 to be investigated is placed to a group of small wells 11. The amount of the material 22 may be quite small, for instance 150 μl pipetted into separate wells of a standard 96-well plate. Of course the number of wells can be selected freely but with a larger number of wells, there is a possibility to average the sensor results, thus increasing the quality of the results. A magnetic sensor 21, which in principle may be e.g. a rod-shaped small piece of magnetic material, is then placed into the wells, one in each well to be measured. In one embodiment, the wells are roundbottomed in order to reduce the lateral movement of the sensors and to reduce the interaction errors between the sensor and the well walls.

The well plate is then surrounded by magnetic field creation means which in Figure 1 is depicted by four pieces of driving coils 12a-d in this embodiment. The coils 12a-d are connected to a signal receiver and current amplifier 13 handling the electric current feeding and measurement for the coils 12a-d. Appropriate controlling means is also needed for the magnetic field creation means. This may be a controller locating integrally within the signal receiver and current amplifier 13.

The rotating magnetic field created by the coils 12a-d results in a rotating force affecting the magnetic rod 21 within the fluidic sample 22. On the other hand, the elastic and viscous properties affect the force which emerges as a restricting force for the magnetic force. Below a critical driving frequency there is either a static situation where the rod 21 is stationary, or a rotating movement of the rod 21 depending on the magnetic field strength and fluid properties. The rotating movement will end up having a fixed angular speed, when the magnetic force and the restricting counter-forces (together with the losses) emerging from the fluid are equal but opposite in their direction.

Furthermore, the apparatus comprises detecting means 14 for visually sensing the angular motion of the magnetic rod-shaped sensor 21 in the well 22. In this example, the visual detecting means is a digital camera 14 fixed on top of the well plate, pointing downwards. The visual data sensed from the wells through the camera can be fed to an analysis software, represented in this example by a computer (PC) 15 provided with a screen 16 for easy illustration of the results.

In one example, the setup of the magnetic field creation means comprises four laminated steel core coils 12a-d placed in pairs in order to surround the wells to be measured. It is beneficial to place the well plate in the middle of these coil pairs, in order to achieve a symmetrical assembly. The coils are then driven with sinusoidal waves with 90° phase difference for generating an oscillating magnetic field.

The digital camera, on the other hand, may record data e.g. up to or even over 1 000 frames per second. The wells with sensors may be video recorded by the camera, and the processing software may be selected appropriately. For instance, LabVIEW gives appropriate results of the presented method.

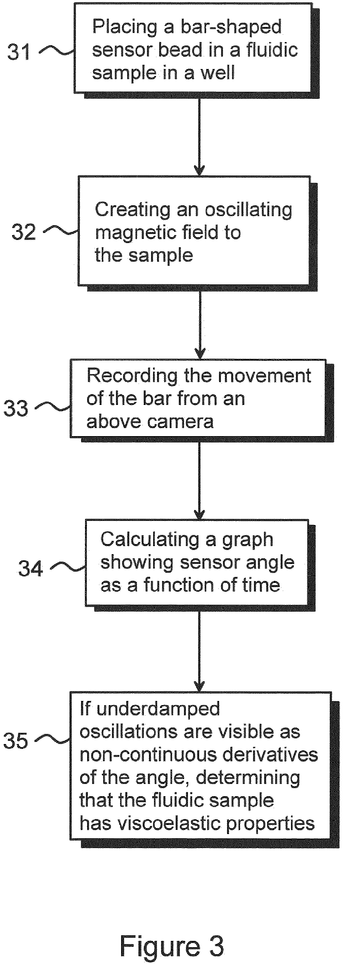

Figure 3 illustrates the corresponding method for determining viscoelasticity of the fluidic material in a flow chart form. In the first step of the method according to an embodiment, a bar or rod-shaped sensor bead is placed in a fluidic sample locating in at least one well 31. The rod-shaped sensor is placed so that it is allowed to rotate around at least one axis freely without making distractive contact with the well walls (i.e. only interacting with the fluid and the external magnetic field). In the second step of the method, an oscillating magnetic field is generated 32 in the proximity of the material well so that a desired rotating magnetic field is created within the well(s) and the sensors placed in the wells. As a result, a rotating movement will initiate for the rod-shape sensors around the vertical axis, and this rotating movement will result in asynchronous rotation.

This rotation movement may be visually sensed by a camera locating on top of the samples 33 and the direction of the camera pointing therefore down. The visual information in serial still images or as a more continuous video recording is then fed into a computer unit which has an analysis software for calculating the angles and angular velocities of the sensor rod. With the analysis software, a graph showing the bar-shaped sensor angle as a function of time may be calculated and presented 34. By examining the graph, e.g. the derivative of the sensor angle gives beneficial information. If there are decaying oscillations in the derivative of the angle, this means that underdamped oscillations are present. In such a case, the presented method reveals that such quickly decaying oscillations of the graph result from the fact that the fluidic sample must be both viscous and elastic at the same time 35, i.e. the material is a viscoelastic substance. In the final step of the presented method, this determination can be made in a reliable manner from the sensor angle graph.

With pure water solutions, the magnetic rotation of the bar-shaped sensor is synchronous due to the low viscosity of the fluid. Average sensor rotation frequency may be observed as a function of magnetic field frequency, and also the sensor angle may be observed as a function of time. In the ideal case of zero friction, the asynchronous forward rotation of the sensor decreases indefinitely with increasing driving frequency. With a rod-type magnetic sensor, there is a maximum driving frequency where the net forward rotation goes to zero. This is a result from the fact that there is non-uniform friction present in the system. For evaluating the angle dependence of the friction, the rotational speed of the sensor can be observed in the synchronous rotational regime. In an example showing angular speed results with 85% glycerol solution (which is a Newtonian fluid), the sensor rotation periodically varies between 160 mHz and 250 mHz and the average rotation rate was 200 mHz $\pm$ 20 mHz, which results from the effect of orientation-dependent friction.

The presence of so-called underdamped oscillations in the sensor behavior correlates with the viscoelasticity of the fluid sample. In prior art, like in Chevry's simulations, micro-sized wire sensors were used and underdamped oscillations were not present in the angular behavior of the sensor in the Newtonian and also in the viscoelastic fluids. In measurements using the method according to the present invention, the underdamped oscillation effect is also missing when measuring the Newtonian fluid and the angular behavior of the sensor. Thus, to appear, underdamped oscillations require two factors: a viscoelastic medium and a relatively high moment of inertia within the used sensor.

The underdamped oscillations arise from the interaction between the inertia of the sensor and the storage modulus (G') of the fluid. In other words, the rotational energy is continuously converted between the rotational kinetic energy of the sensor and the elastic potential energy of the fluid. Some energy also dissipates because of the viscous behavior of the fluid, and this means damping. Therefore the underdamped oscillations will occur in fluids with a non-zero elastic component, with sensor elements having an adequately high mass. These oscillations appear more clearly in frequencies measured in the asynchronous area near the critical frequency, which is also called as the hysteresis area.

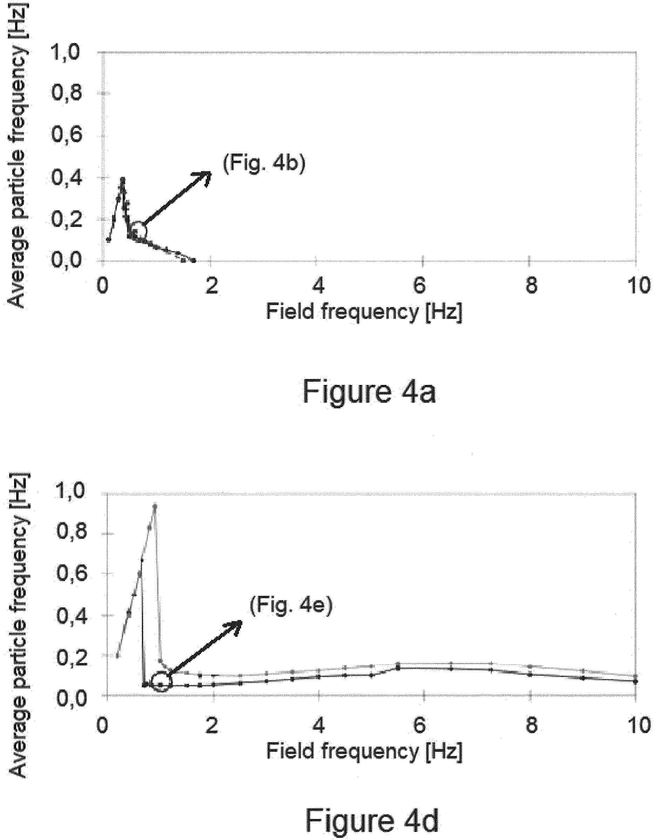

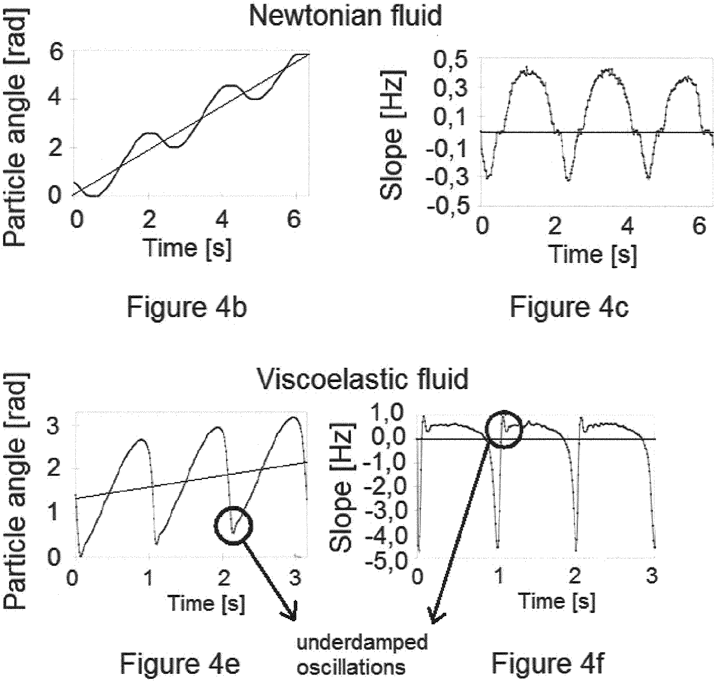

An additional difference between the sensor behavior in the Newtonian and viscoelastic fluids can be observed in the average asynchronous rotation frequency. When increasing the frequencies above the critical frequency, the average rotation of the sensor in the Newtonian fluid will decrease quickly, while in the viscoelastic fluid the average rotation frequency of the sensor will remain relatively the same from 1 Hz to 5 Hz range, see the results in Figure 4, (a) and (d). After the 5 Hz field frequency, a local maximum frequency can be seen in the presence of the viscoelastic medium which has not been reported in prior art. This phenomenon is attributed to the presence of the viscoelastic component in the fluid.

Figure 4, (b) and (e) illustrate the sensor angle as a function of time. In Newtonian fluids such as water and glycerol, the angle does not have sharp step-like changes in a periodical manner. These sharp changes of the sensor angle indicate the presence of viscoelasticity within the measured fluid.

In one embodiment of the invention, the used sensor is a spherical magnetic stir bar. In another embodiment, the bar is a flattened bar in order to restrict its motion within the sample well. Therefore, its cross-section may have an oval form or a rectangular form.

The viscoelasticity may be measured in principle for any material which has fluidic or gel-type properties. The method can be even applied to a single measurement well or to a group of measurement wells, where in the latter averaging is possible in order to enhance the quality of the analysis results.

The used sensor bar, which is defined to be a massive sensor, can in other words be defined as a sensor which has a relatively high moment of inertia when set in a rotating motion. While the sensor may be an elongated rod-shaped magnetic stir bar, it may also be e.g. a spherical magnetic bead whose rotation movement is visible in some other manner. For instance, the spherically formed bead may have a marking (line mark or an appropriate spot) which can be tracked with a camera. The camera can be placed anywhere where it has a visual line of sight towards the well to be measured. It does not have to locate directly over or beneath the sample well.

In one embodiment of the invention, the sensor may be rotor-shaped. The sensor may then comprise one or several disc-shaped plates which may be fabricated e.g. by a 3-dimensional material printer. In case of several disc-shaped plates as a sensor, they are stacked on top of one another with mutual gaps. A ring magnet may be attached to the bottom plate of the rotor-shaped sensor. In order to minimize the friction, a stylus tip may be used as a fulcrum. The angular displacement of the magnet, and therefore the rotor-shaped sensor, can be recorded by a sensor based on the AMR effect. This AMR sensor may be placed below the rotor so that the receptacle containing the material sample and the rotor assembly is placed on top of the AMR magnetic field sensor.

Further, in this embodiment of the invention, the angular data of the sensor can be tracked without any camera. In such an application, the tracking is based on changes in the magnetic field because of the sensor itself, and in measuring those changes. In other words, the sensor is both actuated and observed at the same time using overlapping magnetic fields. In practice this kind of simultaneous actuation and sensing of the magnetic fields is possible when the driving magnetic field is e.g. at least an order of magnitude lower than the field generated by the sensor magnet. It is also possible that the resulting magnetic field is a compensated magnetic field, achieved e.g. through subtraction of the two magnetic fields.

In one merely exemplary setup, the magnet can be a diametrically magnetized, nickel-plated ring magnet made from N45 Neodymium.

In another words, the driving coils actuate the rotor-shaped sensor and ringshaped magnet into a rotating motion in the receptacle. The resulting magnetic field is sensed by the AMR magnetic field sensor locating immediately beneath the receptacle, e.g. in the middle of the square-shaped driving coil arrangement.

It can be said that the sensor and the tracking means in view of the claims comprise both the rotor (disc assembly with the magnet) and the sensing AMR magnetic field sensor in close vicinity of the rotor. The tracking means also comprise the logic for achieving the angular data of the sensor from the AMR magnetic field sensor measurement results.

In an embodiment, the above mentioned AMR (anisotropic magnetoresistance) magnetic field sensor may comprise two galvanic separated Wheatstone bridges orientated at an angle of 45 degrees. When the magnetic field rotates in the sensor plane through the driving magnetic field, two sinusoidal signals will be seen at the outputs of the described sensor. The angular displacement of the rotor (sensor) can be calculated based on the recorded signals. A data point recorded by each input channel is normalized and used as a coordinate of the angular displacement vector (x). The coordinates of a reference vector (y) are chosen as (0,1). The value of an angle is then determined using an inner product of these two vectors, from where the angle can be easily solved as in Equation (1), taken from the definition of the inner product between two vectors:

$$\theta = arccos\left(\frac{x \cdot y}{|x||y|}\right) \qquad\qquad (1)$$

In one embodiment of the invention, the angular information of the sensor may be determined as in the previous description and with Equation (1). In that case, the AMR sensor may locate below the beaker containing the liquid sample. After that the angular data may be further fine-tuned by additional camera equipment placed e.g. above the liquid sample and the sensor, which records the arrangement visually. The recorded images may be processed further with the help of analyzing software. In one embodiment, the AMR sensor below the sample and the video camera above the sample are set to work and act simultaneously.

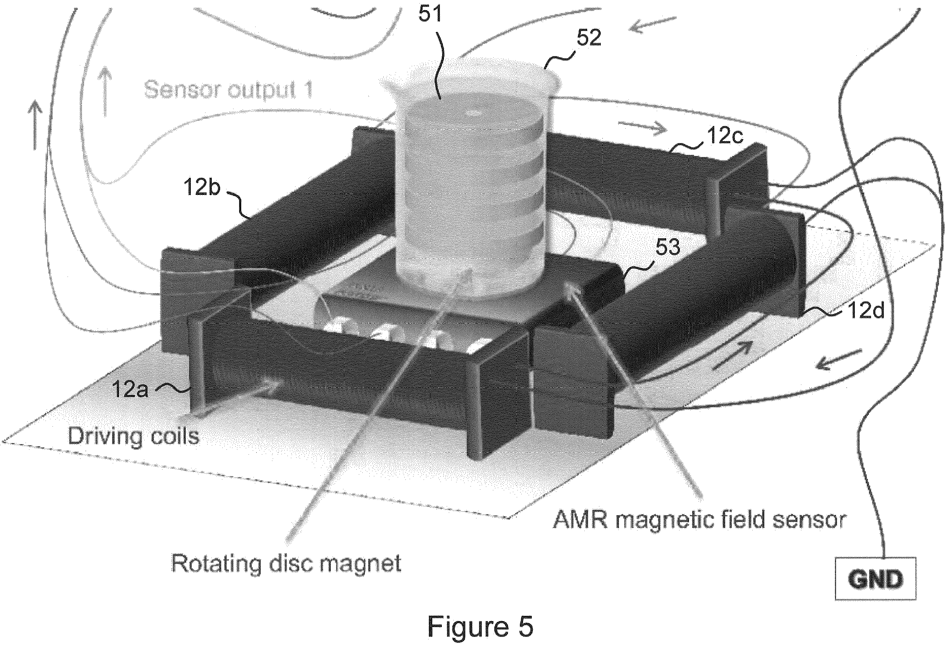

Figure 5 illustrates the above embodiment in an apparatus form. Therefore, in this embodiment, the simultaneous actuation and observation of the sensor is performed through rotating magnetic field, without using a camera. The apparatus comprises a rotating disc magnet 51 which is placed into a receptacle 52 filled with the examined fluid. The receptacle with the fluid and the disc magnet is placed on top of an AMR ("Anisotropic Magneto-Resistive") magnetic field sensor 53. The sensor 53 is thus the means for detecting particle rotation. Driving coils 12a-12d create the external magnetic field the same way as in the earlier embodiments. The signal for the driving coils 12a-12d can be generated by a computer and the generated signal may also be amplified before it is fed to the coils. In the presented embodiment, the coils are physically configured to form a symmetrical squared form where the adjacent driving coils are located in a 90° axis between each other. The ground connection for the coils can also be seen in Figure 5.

The container or the receptacle where the examined fluid or gel-based material is located may be transparent or non-transparent. In another embodiment, the sensor setup can be fixed in a frame or other supporting structure which will locate within the flow of the examined material, or within stationery volume of material. The supporting structure may be an arm or other elongated body which is used to be fixed e.g. to the middle point of sensor bar 21, possible through a bearing in order to minimize or otherwise control the friction. When the internal friction or counter-force present due to a fixing structure of the sensor bar is known, it can be taken into account in the sensor angle observations and calculations described earlier.

The applicable areas of use for the presented invention comprise online biofilm monitoring in various different applications, such as for medical devices, industrial processes or e.g. in heating, plumbing and ventilation engineering. Paper industry is a good example of the industrial application where viscoelastic biofilms are desired to be avoided as much as possible. In paper industry for instance, the presented method gives a possibility to distinguish accumulated material during the process; whether it is biofilm (which is viscoelastic) or inorganic salts (which are not viscoelastic). Food, beverage and e.g. dairy product industries also require non-biofilm environments. Also different kinds of water examination (like swimming water quality analysis) or water/sewage pipe monitoring applications are appropriate targets for the presented method.

The presented method can be used as a viscosity measurement method and as a viscoelasticity measurement method for the examined substances.

The presented method according to the invention can be realized through a computer program where the method steps are implemented in the form of computer program code and executed by a processor. The computer program may be stored in a computer-readable medium.

All the appropriate method steps in the independent and dependent method claims can be implemented also as an embodiment of the computer program which can further be stored in a computer-readable medium as well.

It is possible to combine at least two of the presented features together in order to create a new embodiment of the apparatus or method according to the invention.

The scope of protection is not merely restricted to the examples mentioned above but they may vary within the scope of the claims.

## Claims

1. A method for determining viscoelasticity within a material sample, **characterized in that** the method comprises the steps of:

   - placing a sensor in a material sample;
   - creating an oscillating magnetic field in the volume of the material sample, resulting in a magnetic force setting the sensor off to a rotating motion in the material sample;
   - tracking a relative angle of the sensor as a function of time; and
   - determining the material of the material sample as viscoelastic if underdamped oscillations are present in the relative angle values as a function of time.

2. The method according to claim 1, **characterized in that**:

    - the sensor is essentially rod-shaped or elongated, or
    - the sensor is a disc-shaped plate, or
    - the sensor is formed by at least two disc-shaped plates placed on top of one another.

3. The method according to claim 2, **characterized in that** the sensor comprising at least one disc-shaped plate further comprises a ring magnet attached to a bottom plate of the sensor.

4. The method according to any of the claims 1-3, **characterized in that** the tracking step is performed visually by a camera locating on top of or below the material sample.

5. The method according to any of the claims 1-4, **characterized in that** the tracking step is performed by simultaneous observation and actuation of the sensor using overlapping magnetic fields.

6. The method according to claim 5, **characterized in that** the observation is performed by an Anisotropic Magneto-Resistive magnetic field sensor which sensor comprises two galvanic separated Wheatstone bridges orientated essentially at an angle of 45°.

7. The method according to any of the claims 1-6, **characterized in that** the material to be measured is fluidic or gel-based material, or a mixture or solution comprising several materials, where the sensor is submergeable.

8. An apparatus for determining viscoelasticity within a material sample, **characterized in that** the apparatus comprises:

    - at least one well for a material sample;
    - at least one sensor submerged in the material sample within each well;
    - oscillating magnetic field creation means for creating an oscillating magnetic field in the volume of the wells, resulting in a rotating motion of the sensor in the material sample in the well;
    - control means for controlling the oscillating magnetic field creation means;
    - tracking means for tracking relative angles of the sensor as a function of time;
    - analysis means for detecting underdamped oscillations in the tracked relative angles of the sensor, and if underdamped oscillations are present, the analysis means is further configured to determine the material of the material sample as viscoelastic; and
    - outputting means configured to output the viscoelasticity of the material sample.

9. The apparatus according to claim 8, **characterized in that**:

    - the sensor is essentially rod-shaped or elongated, or
    - the sensor is a disc-shaped plate, or
    - the sensor is formed by at least two disc-shaped plates placed on top of one another.

10. The apparatus according to claim 9, **characterized in that** the sensor comprising at least one disc-shaped plate further comprises a ring magnet attached to a bottom plate of the sensor.

11. The apparatus according to any of the claims 8-10, **characterized in that** the tracking means is a camera or other visual sensing means locating on top of or below the material sample.

12. The apparatus according to any of the claims 8-11, **characterized in that** the tracking means is configured to track the relative angles of the sensor by simultaneous observation and actuation of the sensor using overlapping magnetic fields.

13. The apparatus according to claim 12, **characterized in that** the observation is performed by an Anisotropic Magneto-Resistive magnetic field sensor which sensor comprises two galvanic separated Wheatstone bridges orientated essentially at an angle of 45°.

14. The apparatus according to any of the claims 8-13, **characterized in that** the material to be measured is fluidic or gel-based material, or a mixture or solution comprising several materials, where the sensor is submergeable.

**15.** A computer program for determining viscoelasticity within a material sample, wherein the computer program is implemented as computer program code, which can be executed by a processor, wherein:

- a sensor is placed in a material sample;

**characterized in that** the computer program is configured to comprise the steps of:

- creating an oscillating magnetic field in the volume of the material sample, resulting in a magnetic force setting the sensor off to a rotating motion in the material sample;
- tracking a relative angle of the sensor as a function of time; and
- determining the material of the material sample as viscoelastic if underdamped oscillations are present in the relative angle values as a function of time.

Figure 1

Figure 2

31 — Placing a bar-shaped sensor bead in a fluidic sample in a well

32 — Creating an oscillating magnetic field to the sample

33 — Recording the movement of the bar from an above camera

34 — Calculating a graph showing sensor angle as a function of time

35 — If underdamped oscillations are visible as non-continuous derivatives of the angle, determining that the fluidic sample has viscoelastic properties

Figure 3

(Fig. 4b)

Figure 4a

(Fig. 4e)

Figure 4d

Newtonian fluid

Figure 4b

Figure 4c

Viscoelastic fluid

Figure 4e

underdamped
oscillations

Figure 4f

EP 3 150 987 A1

Figure 5

EP 3 150 987 A1

Europäisches
Patentamt

European
Patent Office

Office européen
des brevets

# EUROPEAN SEARCH REPORT

**Application Number**

EP 15 18 7524

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/047903 A1 (SAKAI KEIJI [JP]) 20 February 2014 (2014-02-20) | 1-5, 7-12,14, 15 | INV. G01N11/14 |
| Y | * figure 1 * * paragraphs [0084] - [0085], [0148], [0161] - [0167], [0171] - [0183] * | 6,13 | |
| X,D | US 2011/036150 A1 (SAKAI KEIJI [JP]) 17 February 2011 (2011-02-17) | 1-5, 7-12,14, 15 | |
| Y | * figures 1-3 * * paragraphs [0050] - [0069], [0103], [0113] - [0126] * | 6,13 | |
| Y | P. KINNUNEN ET AL: "Note: A portable magnetic field for powering nanomotors, microswimmers, and sensors", REVIEW OF SCIENTIFIC INSTRUMENTS., vol. 84, no. 8, 23 August 2013 (2013-08-23), page 086109, XP055261206, US ISSN: 0034-6748, DOI: 10.1063/1.4817630 * figure 1; table 1 * * pages 086109-3, column 1, last paragraph * | 6,13 | |

| | | | TECHNICAL FIELDS SEARCHED (IPC) |
|---|---|---|---|
| | | | G01N |

The present search report has been drawn up for all claims

| Place of search | Date of completion of the search | Examiner |
|---|---|---|
| The Hague | 1 April 2016 | Bockstahl, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 150 987 A1**

## ANNEX TO THE EUROPEAN SEARCH REPORT
## ON EUROPEAN PATENT APPLICATION NO.

EP 15 18 7524

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2016

| Patent document cited in search report | | Publication date | Patent family member(s) | | Publication date |
|---|---|---|---|---|---|
| US 2014047903 | A1 | 20-02-2014 | CN | 103534572 A | 22-01-2014 |
| | | | DE | 112012002120 T5 | 27-02-2014 |
| | | | JP | 5842246 B2 | 13-01-2016 |
| | | | JP | 2012242137 A | 10-12-2012 |
| | | | US | 2014047903 A1 | 20-02-2014 |
| | | | WO | 2012157572 A1 | 22-11-2012 |
| US 2011036150 | A1 | 17-02-2011 | CN | 102016542 A | 13-04-2011 |
| | | | DE | 112009001023 T5 | 07-07-2011 |
| | | | JP | 5093599 B2 | 12-12-2012 |
| | | | JP | 2009264982 A | 12-11-2009 |
| | | | US | 2011036150 A1 | 17-02-2011 |
| | | | WO | 2009131185 A1 | 29-10-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012027747 A, McNaughton, Kinnunen
- US 20110036150 A, Sakai

**Non-patent literature cited in the description**

- **CHEVRY ; SAMPATHKUMAR ; CEBERS ; BER-RET.** Magnetic wire-based sensors for the microrheology of complex fluids. *Phys. Rev. E.,* 2013, vol. 88, 062306